# EUROPÄISCHE PATENTSCHRIFT

(11) **EP 3 391 009 B1**
(45) Veröffentlichungstag und Bekanntmachung des Hinweises auf die Patenterteilung: **21.08.2019**
(21) Anmeldenummer: 16798449.1
(22) Anmeldetag: 15.11.2016
(51) Int. Cl.: G01M 13/02

(54) **KUPPLUNGSPRÜFSTAND**
TEST BENCH FOR CLUTCHES
BANC DE PROBE POUR EMBRAYAGES

(30) Priorität: 17.12.2015 DE 102015225817
(43) Veröffentlichungstag der Anmeldung: 24.10.2018
(73) Patentinhaber: ZF Friedrichshafen AG, 88046 Friedrichshafen (DE)
(72) Erfinder: FRÖHLER, Albert, 94532 Aussernzell (DE)
(86) Internationale Anmeldenummer: PCT/EP2016/077647
(87) Internationale Veröffentlichungsnummer: WO 2017/102205

(56) Entgegenhaltungen:
- CN-A- 103 900 814
- DE-A1- 3 305 848
- DE-T2- 69 839 109

## Beschreibung

Die vorliegende Erfindung betrifft einen Kupplungsprüfstand zum Prüfen von nassen und trockenen Reiblamellenkupplungen, Reibbelägen und kompletten Kupplungen gemäß dem Oberbegriff von Anspruch 1.

Reiblamellenpakete von Kupplungen und Bremsen werden in Automatikgetrieben verwendet. Kupplungsprüfstände für derartige Kupplungen, zum Beispiel nasslaufende Kupplungen, sind bekannt, bei denen in der Prüfkammer die Reiblamellen an sogenannten Innen- und Außenlamellenträger aufgenommen sind. Einer der Lamellenträger nimmt üblicherweise Belaglamellen auf, wobei der andere Lamellenträger Stahllamellen aufnimmt. In den bekannten Prüfständen wird das Lamellenpaket in der Prüfkammer öldicht und wärmeisoliert einer Prüfung unterzogen, bei der sowohl die Innen- als auch die Außenlamellenträger in Drehung versetzt werden. Standardmäßig werden derartige Kupplungsprüfstände in axialer Richtung gesehen derart aufgebaut, dass die Prüfkammer axial zwischen den Antrieben der Lamellenträger angeordnet ist. Diese Anordnungsweise wird als dual-side-Anordnung bezeichnet. In Automatikgetrieben werden die mit unterschiedlicher Drehzahl drehenden Lamellenträger der Kupplung bei einem Schaltvorgang durch einen Kolben zusammengepresst und somit die Kupplung geschlossen, d.h. der Antrieb und der Abtrieb werden auf die gleiche Drehzahl synchronisiert.

Des Weiteren sind Kupplungsprüfstände bekannt, bei denen die zu prüfende Kupplung in der Prüfkammer dem selben axialen Ende der die jeweiligen Lamellenträger antreibenden Wellen zugeordnet ist. Diese Anordnungsweise wird als single-side-Anordnung bezeichnet.

Nachteilig bei den bekannten Kupplungsprüfständen in dual-side-Anordnung ist es, dass diese aufgrund begrenzter Konfigurationsmöglichkeiten und langer Umrüstzeiten oftmals nur eine geringe Auslastung aufweisen, so dass deren teure Anschaffung vielfach nicht lohnenswert erscheint. Dokument DE 69839109 T2 offenbart einen Prüfstand zum Prüfen von Riemen.

Es ist eine Aufgabe der Erfindung, einen verbesserten Prüfstand zum Prüfen von Lamellenkupplungen vorzuschlagen.

Diese Aufgabe wird erfindungsgemäß durch den Prüfstand zum Prüfen von Lamellenkupplungen gemäß Anspruch 1 gelöst. Vorteilhafte Ausgestaltungen und Weiterbildungen der Erfindung gehen aus den abhängigen Ansprüchen hervor.

Die Erfindung betrifft einen Kupplungsprüfstand zum Prüfen von Lamellenkupplungen, umfassend eine erste Antriebseinheit und eine zweite Antriebseinheit, wobei die erste Antriebseinheit trieblich mit einer ersten Welle verbunden ist und wobei die erste Welle drehbar in einer ihrerseits drehbaren ersten Hohlwelle angeordnet ist. Der erfindungsgemäße Kupplungsprüfstand zeichnet sich dadurch aus, dass die zweite Antriebseinheit trieblich mit einer zweiten Welle verbunden ist, wobei die zweite Welle drehbar in einer ihrerseits drehbaren zweiten Hohlwelle angeordnet ist und wobei die erste und die zweite Hohlwelle mittels Koppelmitteln trieblich verbindbar sind.

Somit kann also die erste Antriebseinheit die erste Welle antreiben und die zweite Antriebseinheit kann die zweite Antriebswelle antreiben. Gleichzeitig können die erste und die zweite Hohlwelle trieblich miteinander verbunden werden. Dieser Aufbau ermöglicht eine gegenüber bekannten Kupplungsprüfstanden deutlich vergrößerte Flexibilität hinsichtlich der möglichen Konfigurations- und Verwendungsmöglichkeiten, was z.B. eine bessere Auslastung des erfindungsgemäßen Kupplungsprüfstands erlaubt. Dies wiederum erhöht die Rentabilität des erfindungsgemäßen Kupplungsprüfstands.

Die erste Antriebseinheit und die zweite Antriebseinheit können je nach konkretem Anforderungsprofil an den Kupplungsprüfstand identisch aufgebaut sein oder sich voneinander unterscheiden, z.B. können sie identische oder unterschiedliche Drehzahlbereiche, Drehmomentbereiche bzw. Trägheitsmoment aufweisen. Das Trägheitsmoment beeinflusst dabei insbesondere ein Dynamikverhalten der Antriebseinheiten.

Bei den zu prüfenden Lamellenkupplungen kann es sich sowohl um nasslaufende also auch um trockenlaufende Lamellenkupplungen handeln. Der erfindungsgemäße Kupplungsprüfstand eignet sich zum Prüfen beider Kupplungsgattungen gleichermaßen. Ebenso für einzelne Reibbeläge, z.B. für Bremsen und auch komplette Kupplungen, z.B. von Schaltgetrieben.

Die erste Welle und die zweite Welle sind bevorzugt parallel zueinander angeordnet. Ebenso sind bevorzugt auch die erste Hohlwelle und die zweite Hohlwelle parallel zueinander angeordnet.

Bevorzugt ist die erste Antriebseinheit koaxial zur ersten Welle angeordnet und die zweite Antriebseinheit ist entsprechend bevorzugt koaxial zur zweiten Welle angeordnet.

Vorteilhafterweise ist die erste Welle als Vollwelle ausgebildet. Ebenso vorteilhaft ist auch die zweite Welle als Vollwelle ausgebildet.

Obwohl die erste und die zweite Hohlwelle trieblich miteinander verbindbar sind, ist es - abhängig von der Art des jeweils auszuführenden Prüfverfahrens - nicht zwangsläufig notwendig, dass die erste und die zweite Hohlwelle tatsächlich trieblich miteinander verbunden sind. Die Verbindbarkeit erhöht die Flexibilität und die Verwendungsmöglichkeiten des Kupplungsprüfstands.

Gemäß einer bevorzugten Ausführungsform der Erfindung ist es vorgesehen, dass die Koppelmittel als Riementrieb, als Kettentrieb oder als Zahnradgetriebe ausgebildet sind. Diese Koppelmittel eigenen sich gleichermaßen zur zuverlässigen Herstellung einer belastbaren und dynamischen trieblichen Kopplung der ersten Hohlwelle mit der zweiten Hohlwelle.

Gemäß einer weiteren bevorzugten Ausführungsform der Erfindung ist es vorgesehen, dass der Kupplungsprüfstand weiterhin Kurzschlussmittel umfasst, wobei die Kurzschlussmittel dazu ausgebildet sind, die erste Welle und die erste Hohlwelle trieblich kurzzuschließen und/oder die zweite Welle und die zweite Hohlwelle trieblich kurzzuschließen. Somit kann also zwischen der ersten Welle und der ersten Hohlwelle bzw. zwischen der zweiten Welle und der zweiten Hohlwelle eine trieblich Kopplung hergestellt werden. Dies ermöglicht es, den Kraftfluss ausgehend von der ersten Antriebseinheit auf die erste Welle zu übertragen, von der ersten Welle über die Kurzschlussmittel auf die erste Hohlwelle zu übertragen und von der ersten Hohlwelle über die Koppelmittel auf die zweite Hohlwelle zu übertragen. Somit kann also die zweite Welle von der zweiten Antriebseinheit angetrieben werden und die zweite Hohlwelle von der ersten Antriebseinheit. Dies ermöglicht eine Steuerung bzw. Regelung der Drehzahl der zweiten Welle über die zweite Antriebseinheit und eine Steuerung bzw. Regelung der Drehzahl der zweiten Hohlwelle über die erste Antriebseinheit. Ebenso kann der Kraftfluss aber auch von der zweiten Antriebseinheit auf die zweite Welle, von der zweiten Welle über die Kurzschlussmittel auf die zweite Hohlwelle und von der zweiten Hohlwelle über die Koppelmittel auf die erste Hohlwelle übertragen werden.

Unter dem Begriff "trieblich kurzgeschlossen" ist im Sinne der Erfindung eine drehfeste Kopplung zu verstehen.

Die Kurzschlussmittel können z.B. als Flansch ausgebildet sein, welcher gleichzeitig an die erste Welle und die erste Hohlwelle anflanschbar ist, so dass die erste Welle und die erste Hohlwelle trieblich kurzgeschlossen bzw. verbunden sind. sind die Kurzschlussmittel bzw. der Flansch gleichzeitig an die zweite Welle und die zweite Hohlwelle anflanschbar ist, so dass auch die zweite Welle und die zweite Hohlwelle trieblich kurzgeschlossen bzw. verbunden sind. Somit entsteht eine zuverlässige, belastbare und raumsparende triebliche Kopplung.

Erfindungsgemäß ist es vorgesehen, dass die erste Welle und die zweite Welle jeweils zur trieblichen Kopplung an Außenlamellen einer Lamellenkupplung ausgebildet sind und die erste Hohlwelle und die zweite Hohlwelle jeweils zur trieblichen Kopplung an Innenlamellen der Lamellenkupplung ausgebildet sind. Somit kann also eine zu prüfende Lamellenkupplung sowohl mit der ersten Welle als auch mit der ersten Hohlwelle bzw. sowohl mit der zweiten Welle als auch mit der zweiten Hohlwelle trieblich gekoppelt werden. Da eine Lamellenkupplung üblicherweise zwei gegeneinander drehbare Lagen von Lamellen, nämlich Innenlamellen und Außenlamellen aufweist, können diese unabhängig voneinander angetrieben werden. Sofern es für einen Prüfvorgang nicht notwendig ist, dass sowohl die Innenlamellen als auch die Außenlamellen einer Lamellenkupplung gleichzeitig angetrieben werden, kann die erste Welle trieblich mit den Innenlamellen und die erste Hohlwelle trieblich mit den Außenlamellen einer ersten zu prüfende Lamellenkupplung gekoppelt werden, während die zweite Welle trieblich mit den Innenlamellen und die zweite Hohlwelle trieblich mit den Außenlamellen einer zweiten zu prüfende Lamellenkupplung gekoppelt werden können. Somit können also bis zu zwei Lamellenkupplungen gleichzeitig im Kupplungsprüfstand geprüft werden.

Gemäß einer weiteren bevorzugten Ausführungsform der Erfindung ist es vorgesehen, dass die erste Antriebseinheit trieblich mit der ersten Welle über eine erste Ausgleichskupplung und/oder und einen ersten Drehmomentsensor verbunden ist und dass die zweite Antriebseinheit trieblich mit der zweiten Welle über eine zweite Ausgleichskupplung und/oder und einen zweiten Drehmomentsensor verbunden ist. Daraus ergibt sich der Vorteil, dass mittels der Ausgleichskupplung axiale, radiale und angulare Wellenversatze ausgeglichen werden können. Somit kann der Kupplungsprüfstand auch bei Vorliegen eines oder mehrerer der genannten Wellenversatze zuverlässig betrieben werden. Weiterhin ergibt sich der Vorteil, dass mittels der Drehmomentsensoren die jeweiligen Drehmomente, mit denen die zu prüfenden Lamellenkupplungen beaufschlagt werden, genau erfasst werden können. Somit sind die Prüfbedingungen genau erfassbar.

Gemäß einer weiteren bevorzugten Ausführungsform der Erfindung ist es vorgesehen, dass eine Drehbarkeit der ersten Hohlwelle mittels erster Blockiermittel blockierbar ist und dass eine Drehbarkeit der zweiten Hohlwelle mittels zweiter Blockiermittel blockierbar ist. Dies ermöglicht vorteilhaft das Prüfen einer Bremswirkung der zu prüfenden Lamellenkupplungen. Indem nämlich die Drehbarkeit der ersten bzw. zweiten Hohlwelle blockiert ist, ist ebenso auch eine Drehbarkeit der mit der ersten bzw. zweiten Hohlwelle verbundenen Außenlamellen der ersten bzw. zweiten zu prüfenden Lamellenkupplung blockiert. Die Innenlamellen hingegen können weiterhin von der ersten bzw. zweiten Welle angetrieben werden. Bei einer Betätigung der Lamellenkupplungen im Schließsinne wirken die zu prüfenden Lamellenkupplungen dann als Bremse. Die Blockiermittel ermöglichen somit ein einfaches und schnelles Umrüsten des Kupplungsprüfstands von einem Kupplungsprüfbetrieb einer einzelnen Lamellenkupplung auf einen Bremsprüfbetrieb von zwei Lamellenkupplungen. Dies ermöglicht eine Minimierung des Arbeitsaufwands und der Umrüstzeiten.

Die Blockiermittel können beispielsweise als Schrauben ausgebildet sein, mittels derer die erste bzw. zweite Hohlwelle an einem Gehäuse des Kupplungsprüfstands drehfest fixiert werden können.

Gemäß einer weiteren bevorzugten Ausführungsform der Erfindung ist es vorgesehen, dass der Kupplungsprüfstand einen ersten Axialaktuator zum Betätigen einer ersten zu prüfenden Lamellenkupplung und einen zweiten Axialaktuator zum Betätigen einer zweiten zu prüfenden Lamellenkupplung umfasst. Somit wird das Betätigen der zu prüfenden Lamellenkupplungen im Schließsinne und im Öffnungssinne ermöglicht. Bei einer Betätigung im Schließsinne können die zu prüfenden Lamellenkupplungen insbesondere hinsichtlich ihrer Bremswirkung geprüft werden.

Bevorzugt ist es vorgesehen, dass eine vom ersten bzw. zweiten Axialaktuator aufgebrachte erste bzw. zweite Axialkraft kontinuierlich einstellbar ist. Dies ermöglicht ein feinfühliges und genaues Prüfen der Lamellenkupplungen unter unterschiedlichen Axialkraftbeaufschlagungen.

Gemäß einer besonders bevorzugten Ausführungsform der Erfindung ist es vorgesehen, dass der Kupplungsprüfstand einen ersten Axialkraftsensor und/oder einen ersten Axialwegsensor und/oder dass der Kupplungsprüfstand einen zweiten Axialkraftsensor und/oder einen zweiten Axialwegsensor. Somit kann die durch den ersten Axialaktuator aufgebrachte Axialkraft bzw. die durch den ersten Axialaktuator erzeugte Axialverschiebung zuverlässig erfasst werden. Ebenso kann auch die durch den zweiten Axialaktuator aufgebrachte Axialkraft bzw. die durch den zweiten Axialaktuator erzeugte Axialverschiebung zuverlässig erfasst werden. Dies verbessert die Genauigkeit der Prüfungen der Lamellenkupplungen noch weiter, indem die jeweiligen Prüfbedingungen genau erfassbar sind.

Gemäß einer ganz besonders bevorzugten Ausführungsform der Erfindung ist es vorgesehen, dass der erste Axialaktuator und der zweite Axialaktuator elektrohydraulisch betätigbar sind. Dies ermöglicht eine präzise Steuerbarkeit bzw. Regelbarkeit der Axialaktuatoren bei gleichzeitiger Gewährleistung der Aufbringung hoher Axialkräfte.

Gemäß einer weiteren bevorzugten Ausführungsform der Erfindung ist es vorgesehen, dass die erste Antriebseinheit als erster Elektromotor ausgebildet ist und dass die zweite Antriebseinheit als zweiter Elektromotor ausgebildet ist. Elektromotoren bieten die Vorteile, dass sie sich hinsichtlich ihrer Drehzahl und des von ihnen erzeugten Drehmoments genau steuern bzw. regeln lassen. Zudem haben sie eine kompakte Bauform und eignen sich durch ihren emissionsfreien Betrieb auch zur Verwendung in Hallen.

Bevorzugt ist es vorgesehen, dass die erste Welle am Innendurchmesser und die erste Hohlwelle am Außendurchmesser gemeinsam auf einem nicht rotierbaren ersten Lagerzapfen gelagert sind und dass die zweite Welle am Innendurchmesser und die zweite Hohlwelle am Außendurchmesser gemeinsam auf einem nicht rotierbaren zweiten Lagerzapfen gelagert sind. Aufgrund dieser Lagerung können nahezu beliebige Differenzdrehzahlen zwischen der ersten Welle und der ersten Hohlwelle bzw. zwischen der zweiten Welle und der zweiten Hohlwelle aufgebracht werden, da die Wellen und Hohlwellen jeweils auf einem stationären Lagerelement gelagert sind. Dadurch werden die Belastungen bezüglich Lagerung und Abdichtung minimiert, ohne dadurch den erforderlichen Drehzahlbereich einschränken zu müssen. Des Weiteren steht eine, axial gesehen, gemeinsame Seite bzw. ein gemeinsames Ende der Wellen zur Verfügung, um die Betätigung und die Messung an der Kupplung durchführen zu können.

Gemäß einer weiteren bevorzugten Ausführungsform der Erfindung ist es vorgesehen, dass der Kupplungsprüfstand einen mit Öl befüllbaren und öldichten ersten Prüfkopf zur Aufnahme einer ersten zu prüfenden Lamellenkupplung und einen mit Öl befüllbaren und öldichten zweiten Prüfkopf zur Aufnahme einer zweiten zu prüfenden Lamellenkupplung umfasst. Die zu prüfenden Lamellenkupplungen werden dabei in den ersten bzw. zweiten Prüfkopf eingesetzt und mit der ersten bzw. zweiten Welle und der ersten bzw. zweiten Hohlwelle trieblich gekoppelt, wobei in jeden Prüfkopf nur eine Lamellenkupplung gleichzeitig eingesetzt wird. Indem die Prüfköpfe mit Öl befüllbar und öldicht ausgebildet sind, eignen sie sich zudem vorteilhaft zum prüfen nasskaufender Lamellenkupplungen.

Besonders bevorzugt ist es vorgesehen, dass die Prüfköpfe in einen Ölkreislauf integriert sind, welcher eine Zirkulation des Öls in den Prüfköpfen ermöglicht. Zudem kann somit z.B. eine weitestgehend konstante Temperatur des Öls gewährleistet werden. Dies begünstigt die genaue Wiederholbarkeit bzw. Vergleichbarkeit von Prüfvorgängen.

Gemäß einer weiteren bevorzugten Ausführungsform der Erfindung ist es vorgesehen, dass die erste Antriebseinheit an einem ersten axialen Ende der ersten Welle angeordnet ist und der erste Prüfkopf an einem zweiten axialen Ende der ersten Welle angeordnet ist und dass die zweite Antriebseinheit an einem ersten axialen Ende der zweiten Welle angeordnet ist und der zweite Prüfkopf an einem zweiten axialen Ende der zweiten Welle angeordnet ist. Dieser Aufbau des Kupplungsprüfstands entspricht der sog. single-side-Anordnung und ermöglicht ein einfaches Austauschen der zu prüfenden Lamellenkupplungen, da keine Prüfstandsbestandteile entfernt werden müssen, um eine Lamellenkupplung in einen Prüfstand einzubauen bzw. auszubauen. Somit werden die Stillstandszeiten des Kupplungsprüfstands verkürzt.

Nachfolgend wird die Erfindung anhand von in den Figuren dargestellten Ausführungsformen beispielhaft erläutert.

Es zeigen:
- Fig. 1: schematisch einen aus dem Stand der Technik bekannten Kupplungs-prüfstand,
- Fig. 2: schematisch eine beispielhafte Ausbildungsform eines erfindungsgemäßen Kupplungsprüfstands in einer ersten Konfiguration und
- Fig. 3: schematisch eine beispielhafte Ausbildungsform eines erfindungsgemäßen Kupplungsprüfstands in einer zweiten Konfiguration.

Gleiche Gegenstände, Funktionseinheiten und vergleichbare Komponenten sind figurenübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

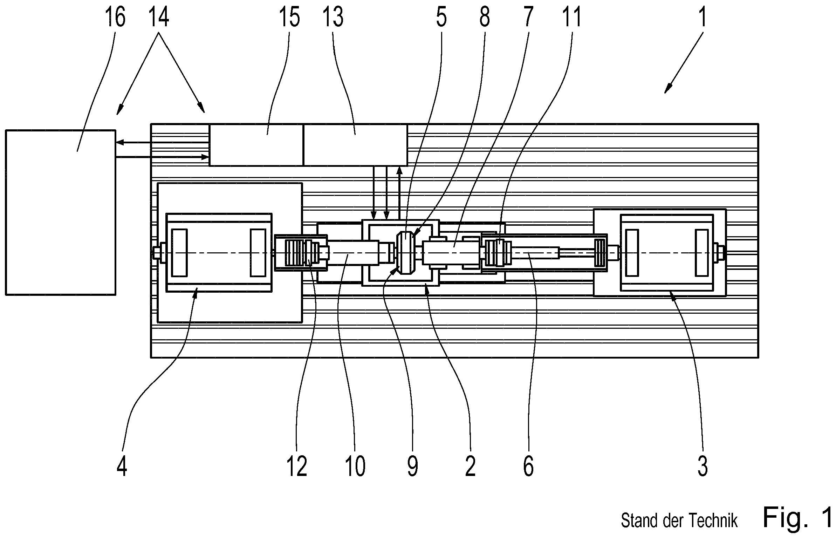

Fig. 1 zeigt schematisch einen aus dem Stand der Technik bekannten Kupplungsprüfstand 1 in der sog. dual-side-Anordnung. Entsprechend dem Prinzip der dual-side Anordnung ist ein Prüfkopf 2 axial zwischen einer Antriebseinheit 3 und einer Abtriebseinheit 4 angeordnet. In der Prüfkammer 2 ist eine zu prüfende Lamellenkupplung 5 angeordnet. Über eine Antriebswelle 6 wird eine Antriebsseite 8 der Lamellenkupplung 5 mit einem Drehmoment beaufschlagt. Sofern ein Axialaktuator 7 die Lamellenkupplung 5 im Schließsinne betätigt, überträgt die Lamellenkupplung 5 das Drehmoment über ihre Abtriebsseite 9 auf die Abtriebswelle 10. Die Abtriebswelle 10 ist ihrerseits von der Abtriebseinheit 4 mit einem Gegenmoment beaufschlagbar, um ein Verhalten der Lamellenkupplung auch im Hochlastbetrieb prüfen zu können. Weiterhin weist die Antriebswelle 9 einen Antriebsdrehmomentsensor 11 auf, welcher das von der Antriebseinheit 3 erzeugte Drehmoment erfasst. Ebenso weist die Abtriebswelle 10 Abtriebsdrehmomentsensor 12 auf, welcher das zwischen Abtriebsseite 9 der Lamellenkupplung 5 und der Abtriebseinheit 4 wirkende Drehmoment erfasst. Somit kann z.B. eine Drehmomentübertragungsfähigkeit der Lamellenkupplung 5 bestimmt werden. Weiterhin umfasst der bekannte Kupplungsprüfstand ein Prüfölsystem 13, welches den Prüfkopf 2 über einen durch Pfeile dargestellten Prüfölkreislauf mit Prüföl versorgt. Unmittelbar benachbart zum Prüfölsystem 13 ist ein Kühlölsystem 14 angeordnet, welches einen durch Pfeile dargestellten Kühlölkreislauf aufweist, in welchen ein Wärmetauscher 15 und eine Kühleinheit 16 integriert sind. Der Wärmetauscher 15 nimmt dabei Wärme aus dem Prüfölkreislauf auf und führt diese ab. Somit kann eine nasslaufende Lamellenkupplung 5 beständig mit kühlendem Prüföl versorgt werden. Ein hydraulischer Kurzschluss zwischen dem Prüfölsystem 13 und dem Kühlölsystem 14 ist nicht realisiert, d.h., die Wärmeabfuhr vom Prüföl zum Kühlöl erfolgt über ein hydraulisches Trennelement. Um die zu prüfende Lamellenkupplung 5 in der Prüfkammer 2 anzuordnen bzw. aus dieser wieder zu entfernen, ist es notwendig, die Antriebseinheit 3, die Antriebswelle 6 und den Axialaktuator 7 zu verschieben bzw. zu entfernen. Hierzu muss eine Vielzahl von Arretierungen und Verschlussmechanismen geöffnet werden, was in der Regel zeitaufwändig ist und somit zu vergleichsweise langen Stillstandszeiten des bekannten Kupplungsprüfstands 1 führt.

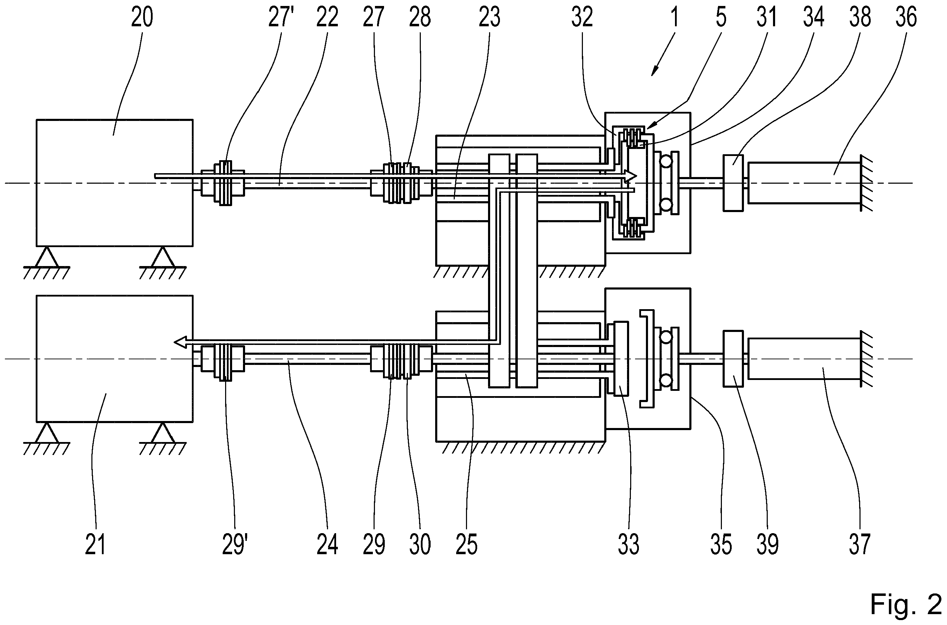

Fig. 2 zeigt schematisch eine beispielhafte Ausbildungsform eines erfindungsgemäßen Kupplungsprüfstands 1 in einer ersten Konfiguration. Der beispielhaft gezeigte Kupplungsprüfstand 1 ist zum Prüfen von nasslaufenden und trockenlaufenden Lamellenkupplungen 5 ausgebildet. Er umfasst eine erste Antriebseinheit 20 und eine zweite Antriebseinheit 21. Die erste Antriebseinheit 20 ist trieblich mit einer ersten Welle 22 verbunden, welche drehbar in einer ihrerseits drehbaren ersten Hohlwelle 23 angeordnet ist. Wie zu sehen ist, ragt die erste Welle 22 in Richtung der ersten Antriebseinheit 20 deutlich aus der ersten Hohlwelle 23 heraus. Die zweite Antriebseinheit 21 ist trieblich mit einer zweiten Welle 22 verbunden, welche drehbar in einer ihrerseits drehbaren zweiten Hohlwelle 25 angeordnet ist. Wie zu sehen ist, ragt auch die zweite Welle 22 in Richtung der zweiten Antriebseinheit 21 deutlich aus der zweiten Hohlwelle 25 heraus. Beispielsgemäß ist die erste Antriebseinheit 20 als erster Elektromotor 20 ausgebildet und die zweite Antriebseinheit 22 ist als zweiter Elektromotor 22 ausgebildet. Über Koppelmittel 26, die beispielsgemäß als Riementrieb 26 ausgebildet sind, sind die erste und die zweite Hohlwelle 23, 25 in der in Fig. 2 gezeigten Konfiguration des Kupplungsprüfstands 1 trieblich miteinander verbunden. Wie weiterhin in Fig. 2 zu sehen ist, sind auf der ersten Welle 22 zwei erste Ausgleichskupplungen 27, 27' und ein erster Drehmomentsensor 28 angeordnet. Ebenso sind auch auf der zweiten Welle 24 zwei zweite Ausgleichskupplungen 29, 29' und ein zweiter Drehmomentsensor 30 angeordnet. Die Ausgleichskupplungen 27, 27' und 29, 29' ermöglichen dabei das Ausgleichen von axialen, radialen und angularen Wellenversatzen zwischen der ersten Antriebseinheit 20 und der ersten Welle 22 bzw. zwischen der zweiten Antriebseinheit 21 und der zweiten Welle 24. Die Drehmomentsensoren 28 und 30 ermöglichen das Erfassen von Drehmomenten, mit denen die erste Welle 22 bzw. die zweite Welle 24 beaufschlagt werden. Die erste Welle 20 und die zweite Welle 22 sind jeweils zur trieblichen Kopplung an Außenlamellen 31 einer Lamellenkupplung 5 ausgebildet sind und die erste Hohlwelle 23 und die zweite Hohlwelle 25 sind jeweils zur trieblichen Kopplung an Innenlamellen 32 der Lamellenkupplung 5 ausgebildet. Im Ausführungsbeispiel der Fig. 2 sind jedoch nur die erste Welle 22 und die erste Hohlwelle 23 mit den Außenlamellen 31 bzw. den Innenlamellen 32 der Lamellenkupplung 5 gekoppelt. Die zweite Welle 24 und die zweite Hohlwelle 25 sind hingegen mit Kurzschlussmitteln 33 miteinander kurzgeschlossen bzw. gekoppelt, d.h. die zweite Welle 24 und die zweite Hohlwelle 25 sind trieblich starr und drehfest miteinander verbunden. Eine relative Rotationsbewegung der zweiten Welle 24 gegenüber der zweiten Hohlwelle 25 wird also durch die Kurzschlussmittel 33 verhindert. Ein von der zweiten Antriebseinheit 21 erzeugtes Drehmoment wird somit durch die Kurzschlussmittel 33 von der zweiten Welle 24 auf die zweite Hohlwelle 25 übertragen. Beispielsgemäß sind die Kurzschlussmitteln 33 als Flansch ausgebildet, welcher anstelle einer Lamellenkupplung mit der zweiten Welle 24 und der zweiten Hohlwelle 25 koppelbar ist. Sowohl die Lamellenkupplung 5 als auch die Kurzschlussmittel 33 sind jeweils in einem Prüfkopf 34 bzw. 35 angeordnet. Die Prüfköpfe 34 und 35 sind beispielsgemäß öldicht ausgebildet und eignen sich zur Befüllung mit einem Prüföl, so dass auch nasslaufende Lamellenkupplungen 5 geprüft werden können. Der beispielhaft gezeigte Kupplungsprüfstand 1 umfasst weiterhin einen ersten Axialaktuator 36 zum Betätigen der Lamellenkupplung 5 und einen zweiten Axialaktuator 37 zum Betätigen einer weiteren, in Fig. 2 jedoch nicht in den Prüfkopf 35 eingebauten Lamellenkupplung. Der erste Axialaktuator 36 und der zweite Axialaktuator 37 sind elektrohydraulisch betätigbar, d.h., dass vom ersten Axialaktuator 36 bzw. vom zweiten Axialaktuator 37 Axialkräfte mittels des Förderns eines hydraulischen Fluids in Zylinder der Axialaktuatoren 36 bzw. 37 erzeugt werden. Dies führt zu einem Verschieben der Kolben in den Zylindern der Axialaktuatoren 36 bzw. 37 und damit einhergehend zu einer Axialbewegung einer Kolbenstange. Da das hydraulischen Fluid mittels einer oder mehrerer elektrisch angetriebener Pumpen erfolgt, spricht man von elektrohydraulisch betätigbaren Axialaktuatoren 36, 37. Über den von den Pumpen erzeugten Fluiddruck können bereits die von den Axialaktuatoren 36, 37 erzeugten Axialkräfte rechnerisch bestimmt werden. Zusätzlich umfasst der Kupplungsprüfstand 1 der Fig. 2 auch Axialkraftsensoren 38 und 39, um die Axialkräfte direkt und vergleichsweise präziser zu erfassen. Wie in der Fig. 2 weiterhin zu sehen ist, ist die erste Antriebseinheit 20 an einem ersten axialen Ende der ersten Welle 22 angeordnet und der erste Prüfkopf 34 ist an einem zweiten axialen Ende der ersten Welle 22 angeordnet. Ebenso ist die zweite Antriebseinheit 21 an einem ersten axialen Ende der zweiten Welle 24 angeordnet und der zweite Prüfkopf 35 ist an einem zweiten axialen Ende der zweiten Welle 24 angeordnet. Eine derartige Ausbildung des Kupplungsprüfstands 1 ist auch als sog. single-side Anordnung bekannt. Diese Anordnung ermöglicht ein vergleichswiese schnelles und einfaches Anordnen bzw. Einbauen von zu prüfenden Lamellenkupplungen 5 in die Prüfköpfe 34 bzw. 35, da nur die Axialaktuatoren 36, 37 geringfügig zurückgefahren werden müssen. Somit verkürzen sich Stillstandszeiten des gezeigten Kupplungsprüfstands 1.

Die in Fig. 2 gezeigte Konfiguration des Kupplungsprüfstands 1 ist für das Prüfen eines Kupplungsverhaltens der Lamellenkupplung 5 ausgelegt. Dazu verläuft ein Kraftfluss im Kupplungsprüfstand 1 entlang der gezeigten Pfeile. Die erste Antriebseinheit 20 erzeugt ein Drehmoment, welches über die erste Welle 22 auf die Außenlamellen 31 der Lamellenkupplung 5 übertragen wird. Abhängig von der erzeugten Axialkraft des ersten Axialaktuators 36 übertragen die Außenlamellen 31 das Drehmoment mehr oder weniger auf die Innenlamellen 32 der Lamellenkupplung 5. Je höher dabei die erzeugte Axialkraft ist, desto höher wird die Drehmomentüberragungsfähigkeit der Lamellenkupplung 5. Von den Innenlamellen 32 wird das Drehmoment nun auf die erste Hohlwelle 23 übertragen, welche das Drehmoment ihrerseits über den Riementrieb 26 auf die zweite Hohlwelle 25 überträgt. Da die zweite Hohlwelle über die Kurzschlussmittel 33 mit der zweiten Welle 24 trieblich gekoppelt ist, wird das Drehmoment über die zweite Welle 24 zur zweiten Antriebseinheit übertragen. Zusätzlich kann die zweite Antriebseinheit prüfsituationsabhängig auch ein Gegenmoment erzeugen, um eine Hochlastsituation für die Lamellenkupplung 5 zu simulieren. Die von den Außenlamellen 31 auf die Innenlamellen 32 übertragenen Kräfte bzw. Drehmomente können dabei über die Drehmomentsensoren 28 und 30 jederzeit präzise erfasst werden. Zusätzlich kann über den Axialkraftsensor 38 eine axialkraftabhängige Drehmomentübertragungsfähigkeit der Lamellenkupplung 5 bestimmt werden.

Gemäß einem weiteren, ebenfalls in Fig. 2 dargestellten Ausführungsbeispiel der Erfindung umfasst der Kupplungsprüfstand 1 anstelle von Axialkraftsensoren 38, 39 einen ersten Axialwegsensor 38 und einen zweiten Axialwegsensor 39. Somit kann die aufgebrachte Axialkraft über den von den Pumpen erzeugten Fluiddruck bestimmt werden während gleichzeitig eine Erfassung des durch die Axialkraft verursachten Axialwegs möglich ist.

Gemäß einem nicht dargestellten Ausführungsbeispiel umfasst der Kupplungsprüfstand 1 der Fig. 2 sowohl erste und zweite Axialkraftsensoren als auch erste und zweite Axialwegsensoren.

Gemäß einem weiteren, nicht dargestellten Ausführungsbeispiel umfasst der in Fig. 2 gezeigte Kupplungsprüfstand 1 zusätzlich ein bekanntes Prüfölsystem 13 und ein bekanntes Kühlölsystem 14, welche gemeinsam eine Versorgung der Prüfköpfe 34 und 35 mit gekühltem Prüföl erlauben.

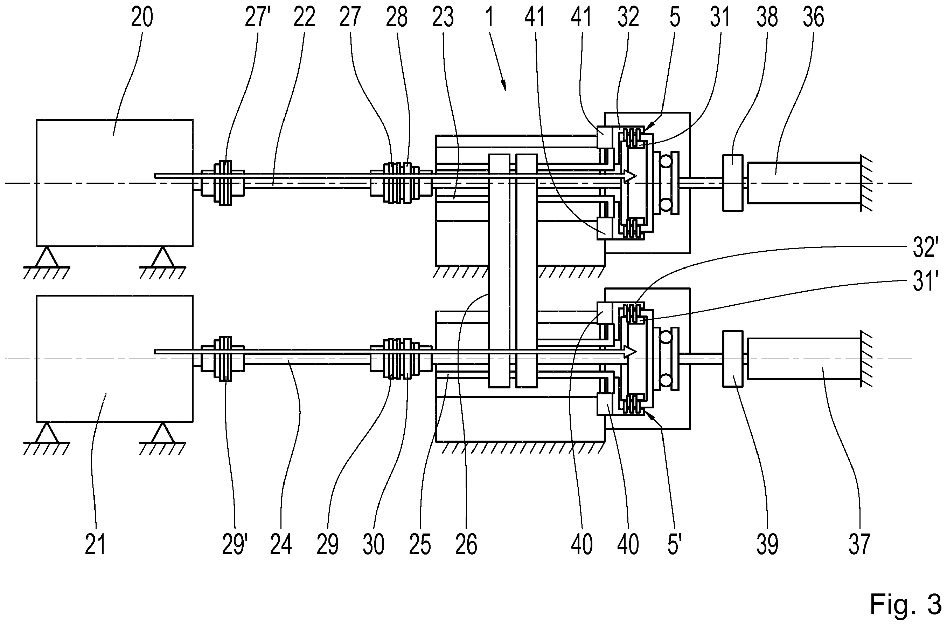

Fig. 3 zeigt schematisch eine beispielhafte Ausbildungsform eines erfindungsgemäßen Kupplungsprüfstands 1 in einer zweiten Konfiguration. Der in Fig. 3 dargestellte Kupplungsprüfstand 1 ist identisch zu dem in Fig. 2 gezeigten Kupplungsprüfstand, jedoch für das Prüfen eines Bremsverhaltens der Lamellenkupplungen 5 und 5' ausgelegt. Lamellenkupplung 5 stellt dabei eine erste Lamellenkupplung 5 dar und Lamellenkupplung 5' stellt eine zweite Lamellenkupplung 5' dar. Im Einzelnen unterscheidet sich die Konfiguration des gezeigten Kupplungsprüfstands 1 der Fig. 3 von dem der Fig. 2 dadurch, dass der Riementrieb 26 nicht mit der ersten Hohlwelle 23 und der zweiten Hohlwelle 25 trieblich verbunden ist. Stattdessen ist der Riementrieb 26 beispielsgemäß trieblich entkoppelt von der mindestens der ersten Hohlwelle 23 oder der zweiten Hohlwelle 25. Ein Drehmoment der ersten Hohlwelle 23 wird also nicht auf die zweite Hohlwelle 25 übertragen und umgekehrt. Weiterhin sind anstelle der Kurzschlussmittel 33 zweite Blockiermittel 40 an der zweiten Hohlwelle 25 angeordnet, welche eine Drehbarkeit der zweiten Hohlwelle gegenüber einem Gehäuse des Kupplungsprüfstands 1 blockieren. Ebenso sind auch erste Blockiermittel 41 an der ersten Hohlwelle 23 angeordnet, welche eine Drehbarkeit der ersten Hohlwelle 23 gegenüber einem Gehäuse des Kupplungsprüfstands 1 blockieren. Im ersten Prüfkopf 34 ist die erste Lamellenkupplung 5 angeordnet und im zweiten Prüfkopf 25 ist die zweite Lamellenkupplung 5' angeordnet. Die erste Lamellenkupplung 5 ist dabei über ihre Außenlamellen 31 trieblich mit der ersten Welle 22 gekoppelt. Über ihre Innenlamellen 32 ist die erste Lamellenkupplung 5 trieblich mit der ersten Hohlwelle 23 gekoppelt. Da die erste Hohlwelle 23 in ihrer Drehbarkeit blockiert ist, ist entsprechend auch die Drehbarkeit der Innenlamellen 32 der ersten Lamellenkupplung 5 blockiert. In identischer Weise sind auch die Außenlamellen 31' der zweiten Lamellenkupplung 5' trieblich mit der zweiten Welle 24 gekoppelt. Über ihre Innenlamellen 32' ist die zweite Lamellenkupplung 5' trieblich mit der zweiten Hohlwelle 25 gekoppelt. Da die zweite Hohlwelle 25 in ihrer Drehbarkeit blockiert ist, ist auch die Drehbarkeit der Innenlamellen 32' der zweiten Lamellenkupplung 5' blockiert.

Ein Kraftfluss im Kupplungsprüfstand 1 zum Prüfen des Bremsverhaltens der Lamellenkupplungen 5 und 5' verläuft entlang der gezeigten Pfeile. Die erste Antriebseinheit 20 erzeugt ein Drehmoment, welches über die erste Welle 22 auf die Außenlamellen 31 der ersten Lamellenkupplung 5 übertragen wird. Abhängig von der erzeugten Axialkraft des ersten Axialaktuators 36 übertragen die Außenlamellen 31 das Drehmoment mehr oder weniger auf die Innenlamellen 32 der ersten Lamellenkupplung 5. Da eine Drehbewegung der Innenlamellen 32 der Lamellenkupplung 5 durch die ersten Blockiermittel 41 blockiert ist, entsteht abhängig von der vom Axialaktuator 36 aufgebrachten Axialkraft eine mehr oder weniger ausgeprägte Bremswirkung. Ein von den Außenlamellen 31 auf die Innenlamellen 32 übertragenes Drehmoment kann dabei über den Drehmomentsensor 28 jederzeit präzise erfasst werden. Zusätzlich kann über den Axialkraftsensor 38 eine axialkraftabhängige Drehmomentübertragungsfähigkeit der ersten Lamellenkupplung 5 bestimmt werden. In identischer Weise wird das Bremsverhalten der Lamellenkupplungen 5' geprüft. Die zweite Antriebseinheit 22 erzeugt ein Drehmoment, welches über die zweite Welle 24 auf die Außenlamellen 31' der zweiten Lamellenkupplung 5' übertragen wird. Abhängig von der erzeugten Axialkraft des zweiten Axialaktuators 37 übertragen die Außenlamellen 31' das Drehmoment mehr oder weniger auf die Innenlamellen 32' der zweiten Lamellenkupplung 5'. Da eine Drehbewegung der Innenlamellen 32' der zweiten Lamellenkupplung 5' durch die zweiten Blockiermittel 40 blockiert ist, entsteht abhängig von der vom Axialaktuator 37 aufgebrachten Axialkraft eine mehr oder weniger ausgeprägte Bremswirkung. Ein von den Außenlamellen 31' auf die Innenlamellen 32' übertragenes Drehmoment kann dabei über den Drehmomentsensor 30 jederzeit präzise erfasst werden. Zusätzlich kann über den Axialkraftsensor 39 eine axialkraftabhängige Drehmomentübertragungsfähigkeit der zweiten Lamellenkupplung 5' bestimmt werden. Der beispielhaft gezeigte Kupplungsprüfstand 1 erlaubt somit das gleichzeitige Prüfend es Bremsverhaltens von zwei Lamellenkupplungen 5, 5'.

### Bezugszeichen

- 1: Kupplungsprüfstand
- 2: Prüfkopf
- 3: Antriebseinheit
- 4: Antriebseinheit
- 5: Lamellenkupplung, erste Lamellenkupplung
- 5': zweite Lamellenkupplung
- 6: Antriebswelle
- 7: Axialaktuator
- 8: Antriebsseite der Lamellenkupplung
- 9: Abtriebsseite der Lamellenkupplung
- 10: Abtriebswelle
- 11: Antriebsdrehmomentsensor
- 12: Abtriebsdrehmomentsensor
- 13: Prüfölsystem
- 14: Kühlölsystem
- 15: Wärmetauscher des Kühlölsystem
- 16: Kühleinheit des Kühlölsystem
- 20: erste Antriebseinheit, erster Elektromotor
- 21: zweite Antriebseinheit, zweiter Elektromotor
- 22: erste Welle
- 23: erste Hohlwelle
- 24: zweite Welle
- 25: zweite Hohlwelle
- 26: Koppelmittel, Riementrieb
- 27, 27': erste Ausgleichskupplung
- 28: erster Drehmomentsensor
- 29, 29': zweite Ausgleichskupplung
- 30: zweiter Drehmomentsensor
- 31: Außenlamellen der ersten Lamellenkupplung
- 31': Außenlamellen der zweiten Lamellenkupplung
- 32: Innenlamellen der ersten Lamellenkupplung
- 32': Innenlamellen der zweiten Lamellenkupplung
- 33: Kurzschlussmittel, Flansch
- 34: erster Prüfkopf
- 35: zweiter Prüfkopf
- 36: erster Axialaktuator
- 37: zweiter Axialaktuator
- 38: erster Axialkraftsensor, erster Axialwegsensor
- 39: zweiter Axialkraftsensor, zweiter Axialwegsensor
- 40: zweite Blockiermittel
- 41: erste Blockiermittel

## Patentansprüche

1. Kupplungsprüfstand (1) zum Prüfen von Lamellenkupplungen (5, 5'), umfassend eine erste Antriebseinheit (20) und eine zweite Antriebseinheit (21), wobei die erste Antriebseinheit (20) trieblich mit einer ersten Welle (22) verbunden ist, wobei die erste Welle (22) drehbar in einer ihrerseits drehbaren ersten Hohlwelle (23) angeordnet ist, wobei die zweite Antriebseinheit (21) trieblich mit einer zweiten Welle (24) verbunden ist, wobei die zweite Welle (24) drehbar in einer ihrerseits drehbaren zweiten Hohlwelle (25) angeordnet ist und wobei die erste und die zweite Hohlwelle (24, 25) mittels Koppelmitteln (26) trieblich verbindbar sind
**dadurch gekennzeichnet, dass** die erste Welle (22) und die zweite Welle (24) jeweils zur trieblichen Kopplung an Außenlamellen (31, 31') einer Lamellenkupplung (5, 5') ausgebildet sind und die erste Hohlwelle (23) und die zweite Hohlwelle (25) jeweils zur trieblichen Kopplung an Innenlamellen (32, 32') der Lamellenkupplung (5, 5') ausgebildet sind.

2. Kupplungsprüfstand (1) nach Anspruch 1,
**dadurch gekennzeichnet, dass** die Koppelmittel (26) als Riementrieb (26), als Kettentrieb oder als Zahnradgetriebe ausgebildet sind.

3. Kupplungsprüfstand (1) nach mindestens einem der Ansprüche 1 oder 2,
**dadurch gekennzeichnet, dass** der Kupplungsprüfstand (1) weiterhin Kurzschlussmittel (33) umfasst, wobei die Kurzschlussmittel (33) dazu ausgebildet sind, die erste Welle (22) und die erste Hohlwelle (23) trieblich kurzzuschließen und/oder die zweite Welle (24) und die zweite Hohlwelle (25) trieblich kurzzuschließen.

4. Kupplungsprüfstand (1) nach mindestens einem der Ansprüche 1 bis 3,
**dadurch gekennzeichnet, dass** die erste Antriebseinheit (20) trieblich mit der ersten Welle (22) über eine erste Ausgleichskupplung (27, 27') und/oder und einen ersten Drehmomentsensor (28) verbunden ist und dass die zweite Antriebseinheit (21) trieblich mit der zweiten Welle (24) über eine zweite Ausgleichskupplung (29, 29') und/oder und einen zweiten Drehmomentsensor (30) verbunden ist.

5. Kupplungsprüfstand (1) nach mindestens einem der Ansprüche 1 bis 4,
**dadurch gekennzeichnet, dass** eine Drehbarkeit der ersten Hohlwelle (23) mittels erster Blockiermittel (41) blockierbar ist und dass eine Drehbarkeit der zweiten Hohlwelle (25) mittels zweiter Blockiermittel (40) blockierbar ist.

6. Kupplungsprüfstand (1) nach mindestens einem der Ansprüche 1 bis 5,
**dadurch gekennzeichnet, dass** der Kupplungsprüfstand (1) einen ersten Axialaktuator 36) zum Betätigen einer ersten zu prüfenden Lamellenkupplung (5) und
einen zweiten Axialaktuator (37) zum Betätigen einer zweiten zu prüfenden Lamellenkupplung (5') umfasst.

7. Kupplungsprüfstand (1) nach Anspruch 6,
**dadurch gekennzeichnet, dass** der Kupplungsprüfstand (1) einen ersten Axialkraftsensor (38) und/oder einen ersten Axialwegsensor und/oder dass der Kupplungsprüfstand (1) einen zweiten Axialkraftsensor (39) und/oder einen zweiten Axialwegsensor umfasst.

8. Kupplungsprüfstand (1) nach mindestens einem der Ansprüche 6 und 7,
**dadurch gekennzeichnet, dass** der erste Axialaktuator (36) und der zweite Axialaktuator (37) elektrohydraulisch betätigbar sind.

9. Kupplungsprüfstand (1) nach mindestens einem der Ansprüche 1 bis 8,
**dadurch gekennzeichnet, dass** die erste Antriebseinheit (20) als erster Elektromotor (20) ausgebildet ist und dass die zweite Antriebseinheit (21) als zweiter Elektromotor (21) ausgebildet ist.

10. Kupplungsprüfstand (1) nach mindestens einem der Ansprüche 1 bis 9,
**dadurch gekennzeichnet, dass** der Kupplungsprüfstand (1) einen mit Öl befüllbaren und öldichten ersten Prüfkopf (34) zur Aufnahme einer ersten zu prüfenden Lamellenkupplung (5) und einen mit Öl befüllbaren und öldichten zweiten Prüfkopf (35) zur Aufnahme einer zweiten zu prüfenden Lamellenkupplung (5') umfasst.

11. Kupplungsprüfstand (1) nach mindestens einem der Ansprüche 1 bis 10,
**dadurch gekennzeichnet, dass** die erste Antriebseinheit (20) an einem ersten axialen Ende der ersten Welle (22) angeordnet ist und der erste Prüfkopf (34) an einem zweiten axialen Ende der ersten Welle (22) angeordnet ist und dass die zweite Antriebseinheit (21) an einem ersten axialen Ende der zweiten Welle (24) angeordnet ist und der zweite Prüfkopf (35) an einem zweiten axialen Ende der zweiten Welle (24) angeordnet ist.

## Claims

1. Clutch test bench (1) for testing multi-disc clutches (5, 5'), comprising a first drive unit (20) and a second drive unit (21), the first drive unit (20) being drive-connected to a first shaft (22), the first shaft (22) being arranged rotatably in a first hollow shaft (23) which is for its part rotatable, the second drive unit (21) being drive-connected to a second shaft (24), the second shaft (24) being arranged rotatably in a second hollow shaft (25) which is for its part rotatable, and it being possible for the first and the second hollow shaft (24, 25) to be drive-connected by means of coupling means (26), **characterized in that** the first shaft (22) and the second shaft (24) are configured in each case for drive-coupling to outer discs (31, 31') of a multi-disc clutch (5, 5'), and the first hollow shaft (23) and the second hollow shaft (25) being configured in each case for drive-coupling to inner discs (32, 32') of the multi-disc clutch (5, 5').

2. Clutch test bench (1) according to Claim 1, **characterized in that** the coupling means (26) are configured as a belt drive (26), as a chain drive or as a gearwheel mechanism.

3. Clutch test bench (1) according to at least one of Claims 1 and 2, **characterized in that**, furthermore, the clutch test bench (1) comprises bypass means (33), the bypass means (33) being configured to bypass the first shaft (22) and the first hollow shaft (23) in drive terms and/or to bypass the second shaft (24) and the second hollow shaft (25) in drive terms.

4. Clutch test bench (1) according to at least one of Claims 1 to 3, **characterized in that** the first drive unit (20) is drive-connected to the first shaft (22) via a first balancing clutch (27, 27') and/or a first torque sensor (28), and **in that** the second drive unit (21) is drive-connected to the second shaft (24) via a second balancing clutch (29, 29') and/or a second torque sensor (30).

5. Clutch test bench (1) according to at least one of Claims 1 to 4, **characterized in that** a rotatability of the first hollow shaft (23) can be blocked by means of first blocking means (41), and **in that** a rotatability of the second hollow shaft (25) can be blocked by means of second blocking means (40).

6. Clutch test bench (1) according to at least one of Claims 1 to 5, **characterized in that** the clutch test bench (1) comprises a first axial actuator (36) for actuating a first multi-disc clutch (5) to be tested and a second axial actuator (37) for actuating a second multi-disc clutch (5') to be tested.

7. Clutch test bench (1) according to Claim 6, **characterized in that** the clutch test bench (1) a first axial force sensor (38) and/or a first axial displacement sensor, and/or **in that** the clutch test bench (1) comprises a second axial force sensor (39) and/or a second displacement sensor.

8. Clutch test bench (1) according to at least one of Claims 6 and 7, **characterized in that** the first axial actuator (36) and the second axial actuator (37) can be actuated electrohydraulically.

9. Clutch test bench (1) according to at least one of Claims 1 to 8, **characterized in that** the first drive unit (20) is configured as a first electric motor (20), and **in that** the second drive unit (21) is configured as a second electric motor (21).

10. Clutch test bench (1) according to at least one of Claims 1 to 9, **characterized in that** the clutch test bench (1) comprises a first test head (34) for receiving a first multi-disc clutch (5) to be tested, which first test head (34) is oil-tight and can be filled with oil, and a second test head (35) for receiving a second multi-disc clutch (5') to be tested, which second test head (35) is oil-tight and can be filled with oil.

11. Clutch test bench (1) according to at least one of Claims 1 to 10, **characterized in that** the first drive unit (20) is arranged at a first axial end of the first shaft (22), and the first test head (34) is arranged at a second axial end of the first shaft (22), and **in that** the second drive unit (21) is arranged at a first axial end of the second shaft (24), and the second test head (35) is arranged at a second axial end of the second shaft (24).

## Revendications

1. Banc d'essai d'embrayage (1) servant à tester des embrayages à disques (5, 5'), comportant une première unité d'entraînement (20) et une deuxième unité d'entraînement (21), dans lequel la première unité d'entraînement (20) est reliée par entraînement à un premier arbre (22), dans lequel le premier arbre (22) est disposé de manière rotative dans un premier arbre creux (23) lui-même rotatif, dans lequel la deuxième unité d'entraînement (21) est reliée par entraînement à un deuxième arbre (24), dans lequel le deuxième arbre (24) est disposé de manière rotative dans un deuxième arbre creux (25) lui-même rotatif, et dans lequel le premier et le deuxième arbre creux (24, 25) peuvent être reliés par entraînement par le biais de moyens d'accouplement (26),
**caractérisé en ce que** le premier arbre (22) et le deuxième arbre (24) sont conçus respectivement pour l'accouplement en entraînement à des disques extérieurs (31, 31') d'un embrayage à disques (5, 5') et le premier arbre creux (23) et le deuxième arbre creux (25) sont conçus respectivement pour l'accouplement en entraînement à des disques intérieurs (32, 32') de l'embrayage à disques (5, 5').

2. Banc d'essai d'embrayage (1) selon la revendication 1,
**caractérisé en ce que** les moyens d'accouplement (26) sont réalisés sous forme d'entraînement par courroie (26), d'entraînement par chaîne ou de transmission par engrenages.

3. Banc d'essai d'embrayage (1) selon au moins l'une des revendications 1 et 2,
**caractérisé en ce que** le banc d'essai d'embrayage (1) comporte en outre des moyens de court-circuit (33), les moyens de court-circuit (33) étant conçus pour court-circuiter en entraînement le premier arbre (22) et le premier arbre creux (23) et/ou pour court-circuiter en entraînement le deuxième arbre (24) et le deuxième arbre creux (25).

4. Banc d'essai d'embrayage (1) selon au moins l'une des revendications 1 à 3,
**caractérisé en ce que** la première unité d'entraînement (20) est reliée par entraînement au premier arbre (22) par le biais d'un premier embrayage compensateur (27, 27') et/ou d'un premier capteur de couple (28), et **en ce que** la deuxième unité d'entraînement (21) est reliée par entraînement au deuxième arbre (24) par le biais d'un deuxième embrayage compensateur (29, 29') et/ou d'un deuxième capteur de couple (30).

5. Banc d'essai d'embrayage (1) selon au moins l'une des revendications 1 à 4,
**caractérisé en ce qu'**une possibilité de rotation du premier arbre creux (23) peut être bloquée par le biais de premiers moyens de blocage (41) et **en ce qu'**une possibilité de rotation du deuxième arbre creux (25) peut être bloquée par le biais de deuxièmes moyens de blocage (40).

6. Banc d'essai d'embrayage (1) selon au moins l'une des revendications 1 à 5,
**caractérisé en ce que** le banc d'essai d'embrayage (1) comporte un premier actionneur axial (36) pour l'actionnement d'un premier embrayage à disques (5) à tester et
un deuxième actionneur axial (37) pour l'actionnement d'un deuxième embrayage à disques (5') à tester.

7. Banc d'essai d'embrayage (1) selon la revendication 6,
**caractérisé en ce que** le banc d'essai d'embrayage (1) un premier capteur de force axiale (38) et/ou un premier capteur de déplacement axial et/ou **en ce que** le banc d'essai d'embrayage (1) comporte un deuxième capteur de force axiale (39) et/ou un deuxième capteur de déplacement axial.

8. Banc d'essai d'embrayage (1) selon au moins l'une des revendications 6 et 7,
**caractérisé en ce que** le premier actionneur axial (36) et le deuxième actionneur axial (37) peuvent être actionnés de manière électrohydraulique.

9. Banc d'essai d'embrayage (1) selon au moins l'une des revendications 1 à 8,
**caractérisé en ce que** la première unité d'entraînement (20) est réalisée sous forme de premier moteur électrique (20) et **en ce que** la deuxième unité d'entraînement (21) est réalisée sous forme de deuxième moteur électrique (21).

10. Banc d'essai d'embrayage (1) selon au moins l'une des revendications 1 à 9,
**caractérisé en ce que** le banc d'essai d'embrayage (1) comporte une première tête d'essai (34) pouvant être remplie d'huile et étanche à l'huile pour recevoir un premier embrayage à disques (5) à tester et une deuxième tête d'essai (35) pouvant être remplie d'huile et étanche à l'huile pour recevoir un deuxième embrayage à disques (5') à tester.

11. Banc d'essai d'embrayage (1) selon au moins l'une des revendications 1 à 10,
**caractérisé en ce que** la première unité d'entraînement (20) est disposée à une première extrémité axiale du premier arbre (22) et la première tête d'essai (34) est disposée à une deuxième extrémité axiale du premier arbre (22), et **en ce que** la deuxième unité d'entraînement (21) est disposée à une première extrémité axiale du deuxième arbre (24) et la deuxième tête d'essai (35) est disposée à une deuxième extrémité axiale du deuxième arbre (24).
